# EUROPEAN PATENT SPECIFICATION

(11) **EP 2 894 949 B1**
(45) Date of publication and mention of the grant of the patent: **07.03.2018**
(21) Application number: 14150959.6
(22) Date of filing: 13.01.2014
(51) Int. Cl.: H02H 9/02, H05B 37/03

(54) **Driving circuit with a trigger circuit and method for triggering a protective element within a driving circuit**
Antriebsschaltung mit einer Triggerschaltung und Verfahren zur Ansteuerung eines Schutzelements in einer Treiberschaltung
Circuit d'entraînement comportant un circuit de déclenchement et procédé de déclenchement d'un élément de protection à l'intérieur d'un circuit d'attaque

(43) Date of publication of application: 15.07.2015
(73) Proprietor: Thales Management & Services Deutschland GmbH, 71254 Ditzingen (DE)
(72) Inventor: Wingerath, Norbert, 71701 Schwieberdingen (DE); Fuchs, Stefan, 71732 Tamm (DE); Taut, Steffen, 71409 Schwaikheim (DE); Rivoir, Peter, 73728 Esslingen (DE)
(74) Representative: Kohler Schmid Möbus Patentanwälte

(56) References cited:
- DE-A1- 4 000 108
- DE-A1- 4 228 647
- GB-A- 2 467 591
- US-B1- 7 586 718

## Description

### Background of the invention

The invention concerns a driving circuit for triggering a protective element within an electric driving circuit comprising an operating circuit with a load to be driven, a power source and a protective element, the load and the protective element being connected via a wire section, wherein a current measuring device for measuring a load current is provided, wherein a trigger circuit is provided, the trigger circuit comprising a comparator for comparing the measured load current with a predetermined threshold and a control device for opening and closing a switch in dependence of the comparison result of the comparator, wherein the switch bypasses the load, wherein the protective element is part of the switch circuit as well as of the operating circuit.
The invention further concerns a method for triggering a protective element within an electric driving circuit.

Electrical driving circuits are used to drive a load, e.g. to control a signal lamp of a traffic light. In case of an overcurrent within the circuit, e.g. due to a short circuit within the load, current flow has to be stopped in order to prevent damages to other electronic devices of the circuit. Fuses or circuit breaker are usually used to interrupt the current flow. The fuse or the circuit breaker must be dimensioned such that it cuts the current reliably in case of a short circuit but must never be triggered in case of a normal current flow including high inrush currents like those for a signal lamp. In case that the voltage and/or the cable length between fuse/circuit breaker and the load are variable, however, the dimensioning of the fuse/circuit breaker is impossible without massive over-dimensioning of the circuitry to be protected.

DE 42 28 647 A1 discloses an overvoltage circuit for a lamp transformer with a self-oscillating power inverter which is triggered by a trigger element. In case of an overvoltage a transistor prevents a new triggering.

US 7,586,718 B1 discloses a control circuit for a lamp transformer for detecting signals that are dangerous to the load. In case of a dangerous signal, the load is separated from the circuit.

DE 40 00 108 A1 discloses a circuit for an electronic control device of low voltage lamp systems.

In currently known circuits standard fuses or circuit breakers have to be dimensioned for the respective cable length which is used for the product, i.e. either an individual dimensioning for each application is necessary or the circuitry to be protected would have to be over-dimensioned to withstand the worst case power dissipation. Since there is no standard value which fits in all required cases, this procedure creates a lot of effort. Otherwise there is a risk that a fuse/circuit breaker will not be triggered creating a potential fire hazard in case of a short circuit.

### Object of the invention

It is an object of the invention to provide a reliable driving circuit which can be used for many different applications (different loads, different cable lengths) without adapting the circuit individually.

### Description of the invention

This object is solved by a driving circuit according to claim 1 and a method for triggering a protective element according to claim 5.

According to the invention the switch bypasses at least 50 % of the length of the wire section when the switch is closed thereby forming a switch circuit, and the current of the power source and the protective element are chosen such that the current within the switch circuit triggers the protective element.

The protective element is an element designed to protect the electrical circuit from damage caused by overload or short circuit (failure), e.g. a fuse or a circuit breaker.

In a special embodiment the load is a signal lamp, e.g. a railway signal lamp.

In normal operation (switch opened) the current produced by the power source runs within the operating circuit. In case of an overcurrent the switch is closed and the current runs within the switch circuit, which bypasses the load.

For driving circuits which are used with varying length of the wire section connecting the load and the protective element it is advantageous that the switch bypasses more than 90%, of the length of the wire section, when the switch is closed.

The current generated by the triggering circuit has to be chosen high enough to trigger the protective element reliably without damaging the other elements within the driving circuit.

In order to maintain the switching state of the switch, it is preferred that the switch is self-latching, in particular a self-latching relay.

In a preferred embodiment of the invention a protective resistor for current limiting is provided within the switch circuit or within the trigger circuit.

The inventive method for triggering a protective element within a driving circuit as described before comprises the following steps:
- measuring the load current;
- comparing the measured load current with a predetermined threshold by means of the comparator;
- bypassing the load by closing switch via the control device of the trigger circuit in case the measured load current exceeds the threshold, wherein at least 50 % of the length of the wire section is bypassed when the switch is closed, thereby forming a switch circuit, wherein the protective element is part of the switch circuit as well as of the operating circuit, wherein the current of the power source and the protective element are chosen such that the current within the switch circuit triggers the protective element.

The inventive method is advantageous for electric circuits with wire sections having different resistive values, e.g. due to different cable length or width. By using the inventive method it is possible to use the same protective element for different cable length without running the risk of failing to trigger the protective element in case of a short circuit.

The inventive method is also advantageous for the usage of loads showing a highly variable load current, e.g. a signal lamp or a motor.

In order to avoid the protective element to be triggered due to a high inrush current the protective element can be chosen overrated (related to the operating current, i.e. the current flowing through the driving circuit after the load has been switched on). By closing the switch the current in the switch circuit and this through the protective element is high enough to trigger the protective element. Thereby the triggering circuit prevents the driving circuit from damage in case of an only slightly enhanced (and long-lasting) load current, which is not high enough to trigger the protective element. The protected element and the magnitude of the current have to be adapted to each other accordingly.

In a preferred variant of the inventive method the switch is closed only in case that the measured current exceeds the threshold for a predetermined minimum duration. This is advantageous, e.g. in case the load is a flashing signal, since triggering of the protective element caused by an overcurrent due to the switching of the flashing signal can be avoided.

Preferably the minimum duration is longer than a flashing cycle of the flashing signal, e.g. 600 - 900ms.

It is preferred that the switch is kept closed by means of a self-latching mechanism as long as an overcurrent exists within the operating circuit.

Preferably the load current is measured between the switch and the load, i.e. within the part of the operating circuit which does not belong to the switch circuit.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.

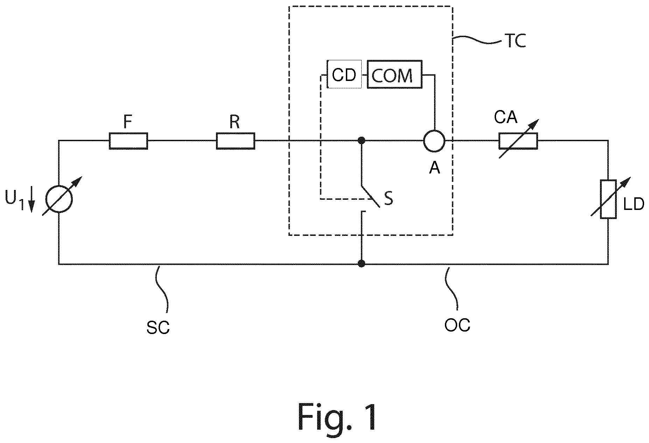

- FIG. 1: shows an inventive driving circuit

In Fig. 1 an inventive driving circuit is shown. A load **LD** is connected via a wire section with a protective element (here: fuse **F**), the load LD, the wire section and the protective element F being part of an operating circuit OC forming a current path in case of a normal operation of the elements. The wire section comprises a cable **CA**, which is drawn as a variable resistance since different length of the cable CA can be provided depending on the application for which the inventive driving circuit is used. The operating circuit OC further comprises a variable power source **U₁** energizing load LD. A protective resistor **R** is provided for limiting the current within the current path.

The inventive driving circuit comprises a trigger circuit **TC** with a current measuring device **A** which measures the load current. The value of the measured load current is transmitted to a comparator **COM** which compares the measured load current with a predetermined threshold value.

The trigger circuit TC comprises a switch **S**, which bypasses the load LD and the cable CA when the switch S is closed. The cable CA represents a considerable part of the wire section, preferably more than 90%. The switch S is controlled by a control device CD. When a load current greater than the threshold value is detected, the switch is closed and a new current path (switch circuit **SC** comprising the power source U₁, the protective element F, the protective resistor R and the switch S) is generated which does not comprise the load L and cable CA anymore (load L and CA are bypassed by the closed switch). The current of the power source U₁ and the protective element F are chosen such that the current within the switch circuit SC triggers the protective element F. Thus the protective element F is triggered reliably even though the short circuit current resulting from a short circuit within the load LD is too low for triggering the protective element F.

### List of reference signs

- A: current measuring device
- CA: cable
- CD: control device
- COM: comparator
- F: fuse
- LD: load
- OC: operating circuit
- R: protective resistor
- S: switch
- SC: switch circuit
- TC: trigger circuit
- U₁: power source

## Claims

1. Driving circuit comprising an operating circuit (OC) with a load (LD) to be driven, a power source (U1) and a protective element (F), the load (LD) and the protective element (F) being connected via a wire section,
wherein a current measuring device (A) for measuring a load current is provided,
wherein a trigger circuit (TC) is provided, the trigger circuit comprising a comparator (COM) for comparing the measured load current with a predetermined threshold and a control device (CD) for opening and closing a switch (S) in dependence of the comparison result of the comparator (COM),
wherein the switch (S) bypasses the load (LD), to form a switch circuit (SC), wherein the protective element (F) is part of the switch circuit (SC) as well as of the operating circuit (OC),
**characterized in**
**that** the switch (S) bypasses at least 50 % of the length of the wire section when the switch (S) is closed thereby forming the switch circuit (SC), and
**that** the current of the power source (U1) and the protective element (F) are chosen such that the current within the switch circuit (SC) triggers the protective element (F).

2. Driving circuit according to claim 1 **characterized in, that** the switch (S) bypasses more than 90% of the length of the wire section when the switch (S) is closed.

3. Driving circuit according to one of the preceding claims, **characterized in that** the switch (S) is self-latching.

4. Driving circuit according to one of the preceding claims, **characterized in, that** a protective resistor (R) is provided within the switch circuit (SC) or within the trigger circuit (TC)

5. Method for triggering a protective element (F) within a driving circuit, the driving circuit comprising an operating circuit (OC) with a load (LD) to be driven, a power source (U1), a current measuring device (A), and a protective element (F), the load (LD) and the protective element (F) being connected via a wire section, the driving circuit further comprising a switch (S) that bypasses the load to form a switch circuit (SC), and the protective element (F) is part of the switch circuit (SC) as well as of the operating circuit (OC), and a trigger circuit (TC) with a comparator (COM) and a control device (CD),
the method comprising the following steps:
• measuring the load current;
• comparing the measured load current with a predetermined threshold by means of the comparator (COM);
• bypassing the load (LD) by closing switch (S) via the control device (CD) of the trigger circuit (TC) in case the measured load current exceeds the threshold, the method **characterised in that** at least 50 % of the length of the wire section is bypassed when the switch (S) is closed, thereby forming the switch circuit (SC), and **in that** the current of the power source (U1) and the protective element (F) are chosen such that the current within the switch circuit (SC) triggers the protective element (F).

6. Method according to claim 5, **characterized in, that** the switch is closed only in case that the measured current exceeds the threshold for a predetermined minimum duration.

7. Method according to claim 6, **characterized in, that** the load (LD) is a flashing signal and the minimum duration is longer than a flashing cycle of the flashing signal.

8. Method according to one of the claims 5 through 7, **characterized in, that** the switch (S) is kept closed by means of a self-latching mechanism as long as an overcurrent exists within the operating circuit (OC).

9. Method according to one of the claims 5 through 8, **characterized in, that** the load current is measured between switch (S) and load (LD).

## Patentansprüche

1. Ansteuerungsschaltung umfassend einen Betriebsschaltkreis (OC) mit einer anzusteuernden Last (LD), eine Stromquelle (U1) und ein Schutzelement (F), wobei die Last (LD) und das Schutzelement (F) durch einen Leiterabschnitt verbunden sind,
wobei ein Strommessgerät (A) zum Messen eines Laststroms vorgesehen ist, wobei ein Triggerschaltkreis (TC) vorgesehen ist, der einen Komparator (COM) zum Vergleichen des gemessenen Laststroms mit einem vorgegebenen Schwellwert, sowie ein Steuergerät (CD) zum Öffnen und Schließen eines Schalters (S) in Abhängigkeit vom Vergleichsergebnis des Komparators (COM) umfasst,
wobei der Schalter (S) die Last (LD) überbrückt, um damit einen Schalterkreis (SC) zu bilden,
wobei das Schutzelement (F) sowohl Teil des Schalterkreises (SC) als auch des Betriebsschaltkreises (OC) ist,
**dadurch gekennzeichnet,**
**dass** der Schalter (S), wenn er geschlossen ist und so einen Schalterkreis (SC) aufbaut, wenigstens 50 % der Länge des Leiterabschnitts überbrückt, und
**dass** der Strom der Stromquelle (U1) und das Schutzelement (F) so gewählt wurden, dass der Strom im Schalterkreis (SC) das Schutzelement (F) auslöst.

2. Ansteuerungsschaltung nach Anspruch 1,
**dadurch gekennzeichnet,**
**dass** der Schalter (S), wenn er geschlossen ist, mehr als 90 % der Länge des Leiterabschnitts überbrückt.

3. Ansteuerungsschaltung nach einem der vorangehenden Ansprüche,
**dadurch gekennzeichnet,**
**dass** der Schalter (S) selbsthaltend ist.

4. Ansteuerungsschaltung nach einem der vorangehenden Ansprüche,
**dadurch gekennzeichnet,**
**dass** im Schalterkreis (SC) oder im Triggerschaltkreis (TC) ein Schutzwiderstand (R) vorgesehen ist.

5. Verfahren zum Triggern eines Schutzelements (F) in einer Ansteuerungsschaltung, wobei
die Ansteuerungsschaltung einen Betriebsschaltkreis (OC) mit einer anzusteuernden Last (LD), eine Stromquelle (U1), ein Strommessgerät (A) und ein Schutzelement (F) umfasst, wobei die Last (LD) und das Schutzelement (F) durch einen Leiterabschnitt verbunden sind,
die Ansteuerungsschaltung des Weiteren einen Schalter (S) umfasst, der zum Aufbau eines Schalterkreises (SC) die Last überbrückt, und wobei das Schutzelement (F) sowohl Teil des Schalterkreises (SC) als auch des Betriebsschaltkreises (OC) ist,
sowie einen Triggerschaltkreis (TC) mit einem Komparator (COM) und einem Steuergerät (CD) umfasst,
wobei das Verfahren die folgenden Schritte aufweist:
• Messen des Laststroms,
• Vergleichen des Laststroms mit einem vorgegebenen Schwellwert mittels des Komparators (COM),
• Überbrücken der Last (LD) durch Schließen des Schalters (S) mittels des Steuergeräts (CD) des Triggerschaltkreises (TC), falls der gemessene Laststrom über dem Schwellwert liegt,
wobei das Verfahren **dadurch kennzeichnet ist,**
**dass**, wenn der Schalter (S) geschlossen ist und so einen Schalterkreis (SC) aufbaut, wenigstens 50 % der Länge des Leiterabschnitts überbrückt werden, und dass der Strom der Stromquelle (U1) und das Schutzelement (F) so gewählt werden, dass der Strom im Schalterkreis (SC) das Schutzelement (F) auslöst.

6. Verfahren nach Anspruch 5,
**dadurch gekennzeichnet,**
**dass** der Schalter nur dann geschlossen wird, wenn der gemessene Strom den Schwellwert über eine vorgegebene Mindestdauer hinweg überschreitet.

7. Verfahren nach Anspruch 6,
**dadurch gekennzeichnet,**
**dass** die Last (LD) ein Blinksignal ist und die Mindestdauer länger als ein Blinkzyklus des Blinksignals ist.

8. Verfahren nach einem der Ansprüche 5 bis 7,
**dadurch gekennzeichnet,**
**dass** der Schalter (S) mittels eines selbsthaltenden Mechanismus solange geschlossen gehalten wird, wie im Betriebsschaltkreis (OC) ein Überstrom vorliegt.

9. Verfahren nach einem der Ansprüche 5 bis 8,
**dadurch gekennzeichnet,**
**dass** der Laststrom zwischen dem Schalter (S) und der Last (LD) gemessen wird.

## Revendications

1. Circuit de pilotage comprenant un circuit de fonctionnement (OC) avec une charge (LD) qui est destinée à être pilotée, une source de puissance (U1) et un élément de protection (F), la charge (LD) et l'élément de protection (F) étant connectés via une section de fil ;
dans lequel est prévu un dispositif de mesure de courant (A) pour mesurer un courant de charge;
dans lequel est prévu un circuit de déclenchement (TC), le circuit de déclenchement comprenant un comparateur (COM) pour comparer le courant de charge mesuré avec un seuil prédéterminé et un dispositif de commande (CD) pour ouvrir et fermer un commutateur (S) en fonction du résultat de comparaison du comparateur (COM) ;
dans lequel le commutateur (S) dérive la charge (LD), de manière à former un circuit de commutation (SC) ;
dans lequel l'élément de protection (F) est une partie du circuit de commutation (SC) de même que du circuit de fonctionnement (OC) ;
**caractérisé en ce que** :
le commutateur (S) dérive au moins 50 % de la longueur de la section de fil lorsque le commutateur (S) est fermé, d'où ainsi la formation du circuit de commutation (SC),
et **en ce que** :
le courant de la source de puissance (U1) et celui de l'élément de protection (F) sont choisis de telle sorte que le courant à l'intérieur du circuit de commutation (SC) déclenche l'élément de protection (F).

2. Circuit de pilotage selon la revendication 1, **caractérisé en ce que** le commutateur (S) dérive plus de 90 % de la longueur de la section de fil lorsque le commutateur (S) est fermé.

3. Circuit de pilotage selon l'une des revendications précédentes, **caractérisé en ce que** le commutateur (S) est autoentretenant.

4. Circuit de pilotage selon l'une des revendications précédentes, **caractérisé en ce qu'**une résistance de protection (R) est prévue à l'intérieur du circuit de commutation (SC) ou à l'intérieur du circuit de déclenchement (TC).

5. Procédé pour déclencher un élément de protection (F) à l'intérieur d'un circuit de pilotage, le circuit de pilotage comprenant un circuit de fonctionnement (OC) avec une charge (LD) qui est destinée à être pilotée, une source de puissance (U1), un dispositif de mesure de courant (A) et un élément de protection (F), la charge (LD) et l'élément de protection (F) étant connectés via une section de fil ;
le circuit de pilotage comprenant en outre un commutateur (S) qui dérive la charge de manière à former un circuit de commutation (SC), et l'élément de protection (F) est une partie du circuit de commutation (SC) de même que du circuit de fonctionnement (OC), et un circuit de déclenchement (TC) avec un comparateur (COM) et un dispositif de commande (CD), le procédé comprenant les étapes qui suivent :
• la mesure du courant de charge ;
• la comparaison du courant de charge mesuré avec un seuil prédéterminé au moyen du comparateur (COM) ;
• la dérivation de la charge (LD) en fermant le commutateur (S) via le dispositif de commande (CD) du circuit de déclenchement (TC) au cas où le courant de charge mesuré excède le seuil,
le procédé étant **caractérisé en ce que**
au moins 50 % de la longueur de la section de fil est dérivée lorsque le commutateur (S) est fermé, d'où ainsi la formation du circuit de commutation (SC) ;
et **en ce que** :
le courant de la source de puissance (U1) et celui de l'élément de protection (F) sont choisis de telle sorte que le courant à l'intérieur du circuit de commutation (SC) déclenche l'élément de protection (F).

6. Procédé selon la revendication 5, **caractérisé en ce que** le commutateur est fermé seulement au cas où le courant mesuré excède le seuil pendant une durée minimum prédéterminée.

7. Procédé selon la revendication 6, **caractérisé en ce que** la charge (LD) est un signal clignotant et la durée minimum est plus longue qu'un cycle de clignotement du signal clignotant.

8. Procédé selon l'une des revendications 5 à 7, **caractérisé en ce que** le commutateur (S) est maintenu fermé au moyen d'un mécanisme autoentretenant aussi longtemps qu'une surintensité existe à l'intérieur du circuit de fonctionnement (OC).

9. Procédé selon l'une des revendications 5 à 8, **caractérisé en ce que** le courant de charge est mesuré entre le commutateur (S) et la charge (LD).
